# FASCICULE DE BREVET EUROPEEN

(11) **EP 3 635 387 B1**
(45) Date de publication et mention de la délivrance du brevet: **09.08.2023**
(21) Numéro de dépôt: 18728638.0
(22) Date de dépôt: 06.06.2018
(51) Int. Cl.: G01N 31/22, G01N 21/78, B60H 1/00

(54) **DISPOSITIF D'IDENTIFICATION D'AU MOINS UNE COMPOSITION DE FLUIDE REFRIGERANT ET PROCEDE**
VORRICHTUNG ZUM IDENTIFIZIEREN VON MINDESTENS EINER KÄLTEMITTELFLUIDZUSAMMENSETZUNG UND VERFAHREN
DEVICE FOR IDENTIFYING AT LEAST ONE REFRIGERANT FLUID COMPOSITION AND METHOD

(30) Priorité: 07.06.2017 FR 1755054
(43) Date de publication de la demande: 15.04.2020
(73) Titulaire: Norauto France, 59262 Sainghin-en-Mélantois (FR)
(72) Inventeur: MARCINKOWSKI, Jean-Luc, 60590 Boutencourt (FR); CAUBERGHS, Matthieu, 59235 Bersée (FR)
(74) Mandataire: Touroude, Magali Linda
(86) Numéro de dépôt international: PCT/EP2018/064839
(87) Numéro de publication internationale: WO 2018/224525

(56) Documents cités:
- WO-A1-2012/166760
- DE-A1- 4 213 270
- GB-A- 2 022 250
- US-A1- 2006 127 543
- US-A1- 2013 230 929

## Description

### DOMAINE DE L'INVENTION

La présente invention concerne en général le domaine de la climatisation, en particulier dans le domaine automobile. Notamment, l'invention peut être utilisée dans un contexte d'entretien des circuits de climatisation de véhicules automobiles, cet entretien pouvant nécessiter l'identification de la nature d'un fluide réfrigérant parmi plusieurs fluides réfrigérants potentiels.

### ARRIERE-PLAN TECHNOLOGIQUE

Les systèmes de climatisation utilisés dans le domaine automobile comprennent un circuit de fluide caloporteur, permettant d'évacuer les calories vers l'extérieur de l'habitacle, le fluide étant constitué par un fluide frigorigène généralement d'un type précis suivant la réglementation en vigueur. Jusqu'à récemment, un fluide frigorigène fluoré connu sous la référence usuelle R-134a était employé.

Un nouveau fluide frigorigène est arrivé sur le marché des véhicules automobiles récemment. Ce nouveau fluide porte la référence R-1234yf et remplace progressivement le précédent. Le R-134a n'est plus autorisé depuis 2014 dans les nouveaux modèles de véhicules (nouveaux types) et sera interdit dans tous les véhicules neufs à compter de 2017.

Il y a donc deux types de gaz possibles dans un véhicule (ancien ou nouveau) et il y a deux types de gaz sur le marché pour la maintenance des véhicules. Chaque véhicule doit conserver le type de gaz pour lequel il a été homologué.

L'expérience montre que la cohabitation de deux types de gaz sur le marché va conduire inéluctablement à des mélanges, des erreurs (volontaires ou involontaires). Il est donc souhaitable de pouvoir distinguer ces gaz lors d'interventions sur les systèmes de climatisation des véhicules, en réparation et en entretien.

On a proposé par le passé des dispositifs permettant l'identification d'un gaz réfrigérant. C'est en effet ce que propose la publication brevet US A1 5 158 747 qui divulgue un appareil pour identifier et distinguer un gaz réfrigérant parmi au moins deux types différents de réfrigérant. Cet appareil comprend une partie de raccordement à un circuit de climatisation permettant d'admettre une quantité de fluide réfrigérant dans un volume au niveau duquel une détection est opérée. Cette détection est basée sur des propriétés physiques du gaz admis dans l'appareil et en particulier le poids moléculaire, la chaleur spécifique ou encore les propriétés diélectriques ou acoustiques. Compte tenu de la forte ressemblance chimique et physique entre les gaz réfrigérants utilisés, et notamment en ce qui concerne les composés fluorés R-134a et R-1234yf, l'efficacité d'un tel appareil est soit problématique, soit implique des moyens de détection très précis donc complexes et coûteux.

C'est un objet de l'invention que de pallier au moins en partie les inconvénients des techniques actuelles.

### RESUME DE L'INVENTION

La présente invention se rapporte à un dispositif d'identification d'au moins une composition de fluide réfrigérant, comprenant un volume de réception de fluide réfrigérant dotée d'une entrée apte à être raccordée à un circuit de climatisation, et des moyens de détection de présence de l'au moins une composition dans le fluide réfrigérant dans le volume de réception.

Le dispositif de la présente invention est défini dans la revendication 1.

Les moyens de détection comprennent un réactif placé dans le volume de réception et configuré pour réagir par une réaction chimique avec au moins une fonction éthylène, de sorte à identifier une composition comprenant une fonction éthylène, le réactif étant configuré pour que le produit de la réaction chimique présente une couleur différente de celle du réactif.

Ainsi, on peut discriminer des compositions de fluides réfrigérants selon la présence ou l'absence d'une fonction éthylène, similaire à une molécule d'éthylène, à savoir une fonction avec une double liaison covalente entre deux atomes de carbone. Cela est particulièrement utile pour les fluides connus sous les références R-134a et R-1234yf. En effet, le fluide R-134a, utilisé jusqu'à présent, ne comprend pas de fonction éthylène (il n'y a pas de double liaison covalente entre deux atomes de carbone), au contraire de celui R-1234yf, ce que le demandeur a opportunément noté et exploité. Grâce à l'invention, on opère une détection simple parmi ces deux fluides alors même que cette détection parait de prime abord délicate dans la mesure où ces fluides sont par ailleurs très similaires, notamment en ce qu'il s'agit de fluides fluorés de propriétés fort proches.

De manière préférée, l'identification peut se faire par inspection visuelle.

Soit le fluide admis et restant dans le volume de réception engendre un changement de couleur et on peut déduire que le fluide est à fonction éthylène, soit aucun changement visuel n'est constaté, ce dont on déduit que le fluide ne comprend pas de fonction éthylène. La fonction éthylène (que l'on pourrait aussi appeler fonction alcène) permet d'identifier qu'un composant de la famille des alcènes est présent.

Un autre aspect séparable de l'invention est un dispositif d'identification comprenant un corps doté d'un volume de réception d'un fluide réfrigérant, et une interface de raccordement qui est de préférence amovible relativement au corps.

Un autre aspect séparable de l'invention concerne un procédé d'identification d'au moins une composition de fluide réfrigérant d'un circuit de climatisation, comprenant une détection de présence de l'au moins une composition dans le fluide réfrigérant dans un volume de réception de fluide, caractérisé en ce que la détection comprend la mise en contact du fluide réfrigérant avec un réactif placé dans le volume de réception et configuré pour réagir lors d'une réaction chimique avec une fonction éthylène, de sorte à identifier une composition comprenant une fonction éthylène, le réactif étant choisi pour que le produit de la réaction chimique présente une couleur différente de celle du réactif.

### BREVE INTRODUCTION DES FIGURES

D'autres caractéristiques, buts et avantages de la présente invention apparaitront à la lecture de la description détaillée qui suit, en regard des dessins annexés, donnés à titre d'exemples, non limitatifs, et sur lesquels :
- la FIGURE 1a montre un dispositif de l'invention selon un principe général; la FIGURE 1b montre une forme de support de réactif possible ;
- les FIGURES 2 et 3 montrent un autre mode de réalisation de l'invention respectivement en perspective et en coupe ;
- les FIGURES 4 et 5 montrent un autre mode de réalisation de l'invention respectivement en perspective et en coupe ;
- les FIGURES 6 et 7 montrent un autre mode de réalisation de l'invention respectivement en coupe et de profil ;
- les FIGURES 8 et 9 montrent un autre mode de réalisation de l'invention respectivement en coupe et de profil.

Les dessins sont donnés à titre d'exemples et ne sont pas limitatifs de l'invention. Ils constituent des représentations schématiques de principe destinées à faciliter la compréhension de l'invention.

### DESCRIPTION DETAILLEE

Avant d'entamer une revue détaillée de modes de réalisation de l'invention, sont énoncées ci-après des caractéristiques optionnelles qui peuvent éventuellement être utilisées suivant toute association ou alternativement :
- le réactif comprend un oxydant de la fonction éthylène ;
- au moins un filtre disposé entre l'entrée fluidique 5 et le réactif ;
- le au moins un filtre est configuré pour piéger des fluides huileux en laissant passer le fluide réfrigérant ;
- le au moins un filtre comprend de l'alumine ;
- le au moins un filtre comprend une première couche d'alumine 7 poreuse au fluide réfrigérant ;
- le réactif est porté par au moins un support 6 contenant ou consistant en de l'alumine ou en un silicate ;
- le support 6 comprend une deuxième couche d'alumine poreuse au fluide réfrigérant ;
- le volume de réception comprend une pluralité de particules, au moins une portion du réactif étant située sur la surface extérieure d'au moins une partie des particules ;
- les particules sont des billes ;
- les billes présentent un diamètre compris entre 2.5 mm et 5 mm, et de préférence entre 3 mm et 4 mm ;
- le réactif a un poids compris entre 1 et 2 grammes, et de préférence de 1.5 grammes ;
- une couche postérieure d'alumine 8 poreuse au fluide réfrigérant est comprise en aval du réactif relativement à l'entrée fluidique 5 ;
- le réactif contient du permanganate de potassium ;
- un corps 2 délimite le volume de réception 1, la paroi du corps 2 étant transparente au moins au niveau du réactif ;
- une interface 11 de raccordement fluidique comprend un passage de fluide vers l'entrée 5 et apte à être connectée mécaniquement à un circuit de climatisation ;
- l'interface 11 comprend un percuteur 10 configuré pour ouvrir une valve d'un embout 12 du circuit de climatisation ;
- l'interface 11 et le corps 2 peuvent être deux pièces distinctes assemblables de manière amovible, par exemple par une liaison de vissage ; ces parties peuvent aussi être monoblocs et notamment être venu d'une seule matière ;
- un joint 13 est applicable sur une embouchure d'un embout 12 du circuit de climatisation ;
- le joint 13 est déformable en flexion lors d'une poussée de l'embout 12 ;
- une paroi de guidage est comprise par emmanchement d'un embout 12 du circuit de climatisation.

Eventuellement, les options suivantes sont aussi possibles :
- la masse de la quantité maximale de fluide réfrigérant admissible dans le volume de réception est telle que le fluide est en excès relativement à la quantité de réactif;
- une extrémité distale est dotée de moyens d'accouplement avec un outil ; une empreinte peut permettre à un outil d'entrainer le dispositif ; cette empreinte peut être du type 6 pans ; elle peut être femelle (pour utilisation d'une clé mâle, par exemple à 6 pans) ou mâle ;
- l'interface comprend des moyens de montage sur un embout du circuit de climatisation.

A moins qu'il n'en soit disposé autrement par la suite, les caractéristiques d'un mode de réalisation peuvent être indifféremment mises en oeuvre dans d'autres modes de réalisation. L'identification permise par l'invention a notamment pour but de différencier deux fluides réfrigérants (ou éventuellement deux familles de fluides) et en particulier deux fluides employés de manière exclusive dans le secteur automobile et portant les références réglementaires R-1234yf et R-134a. Dans ce cas, la discrimination de l'un par rapport à l'autre suffit pour identifier sans ambiguïté le fluide en présence. D'une manière générale, l'identification de l'invention sert pour le moins à identifier, même de manière non unique, un fluide par sa caractérisation quant à la présence ou non d'une fonction éthylène.

Le tétrafluoroéthane est un hydrocarbure halogéné de formule brute C2H2F4. Ce gaz est utilisé principalement comme fluide réfrigérant sous le nom de R-134a ou HFC-134a. Composé de la classe des hydrofluorocarbures (HFC), il n'a pas d'impact sur la couche d'ozone (ODP = 0), et donc a été désigné pour remplacer les divers CFC (plus particulièrement, le Dichlorodifluorométhane R-12) utilisés dans les systèmes de refroidissement. Cependant, ce composé chimique contribue grandement à l'effet de serre.

Le tétrafluoropropène, HFO-1234yf ou R-1234yf, est un Hydrofluoroalcène de formule CH2 = CFCF3. Plus récemment, ce gaz a été notamment proposé pour remplacer le R-134a (tétrafluoroéthane) comme fluide frigorigène dans les circuits de climatisation des voitures. Le tétrafluoropropène est un gaz inflammable, qui peut se décomposer en fluorure d'hydrogène et halogénures de carbonyle.

Les propriétés physico-chimiques des composés ci-dessus sont sensiblement similaires. Ce point est également observé concernant la toxicité. De même, les performances techniques du R-1234yf sont comparables à celles du R-134a. Concernant la compatibilité avec les polymères et les élastomères, les données collectées ne mettent pas en avant de différence également sur cet aspect technique.

L'ensemble des données collectées sur les gaz R-134a et R-1234yf ne mettent pas en avant de différence significative dans le cadre de leur utilisation comme réfrigérant des systèmes de climatisation automobile (incompatibilités) et de leurs propriétés physico-chimiques, ce qui est problématique pour les distinguer.

Cependant, le demandeur a détecté une différence chimique entre ces deux molécules fluorées qui est la présence d'une fonction éthylène dans la formule du R-1234yf qui n'est pas retrouvée sur le R-134a. C'est grâce à cette différence que l'invention se propose d'opérer une distinction potentielle entre les deux fluides réfrigérants. En effet, la double liaison C = C ne se trouve que dans la fonction éthylène.

Dans un mode particulier de réalisation, la détection d'une fonction éthylène est réalisée par un réactif permettant l'oxydation de cette fonction suivant une réaction d'oxydoréduction. Dans un cas préféré, le réactif objet de la réduction subit une coloration qui peut être inspectée visuellement de sorte à détecter si la réaction d'oxydoréduction souhaitée a été effectivement produite et si, par conséquent, une fonction éthylène était présente dans le fluide mis au contact du réactif.

Dans un mode de réalisation, le réactif peut consister en ou contenir du permanganate de potassium. On peut alors décrire la détection chimique de la présente invention par la réaction d'oxydoréduction suivante :

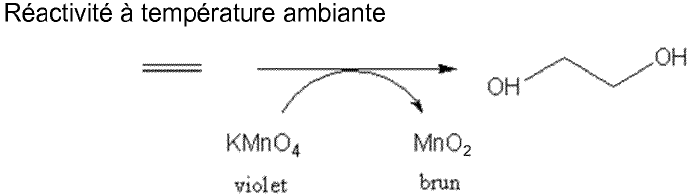

La double liaison du fluide R-1234yf réagit ici avec le permanganate de potassium (avantageusement dans des conditions de pH supérieur ou égal à 7) de sorte à former un diol et un précipité de couleur brune (MnO4) identifiable visuellement.

Suivant un mode de réalisation, un support solide est utilisé pour porter le réactif de la fonction éthylène. Ce dernier peut par exemple être fabriqué à partir d'une solution notamment aqueuse dont le support est imbibé ou revêtu, le réactif étant ensuite séché.

Dans le cas du permanganate de potassium, le réactif présente une coloration rose/violette par défaut. S'il est mis au contact d'un fluide présentant une fonction éthylène, sa réduction engendre un produit de réaction de couleur nettement plus foncée, typiquement marron. Cela révèle une présence d'une insaturation dans le fluide réfrigérant.

Le demandeur a validé que des solutions aqueuses de permanganate de potassium à hauteur de concentration molaire respectivement de 0,6 ; 6,3 et 63 mmol. I⁻¹ peuvent donner satisfaction. On constate que la puissance de la réaction d'oxydation du permanganate de potassium permet de limiter fortement les quantités efficaces de réactif. Dans le contexte des concentrations précédentes, on a testé la mise en contact de 2 ml de chaque solution avec un support. Sans mise en contact avec un fluide réfrigérant, aucun changement de couleur n'est constaté. Le support recouvert du réactif le moins concentré restant de couleur fuchsia, celui intermédiaire de couleur violette et le plus concentré de couleur violette très foncée. La même couleur est constatée lorsqu'un fluide réfrigérant du type R-134a est mis au contact du support par barbotage sous forme gazeuse pendant 30 secondes. Par contre, dans les mêmes conditions de mise en contact appliquées au fluide R-1234yf, le support doté du réactif change nettement de couleur. Il devient de couleur brune pour la concentration la moins élevée, de couleur brune foncée pour la concentration intermédiaire et pour la concentration la plus forte.

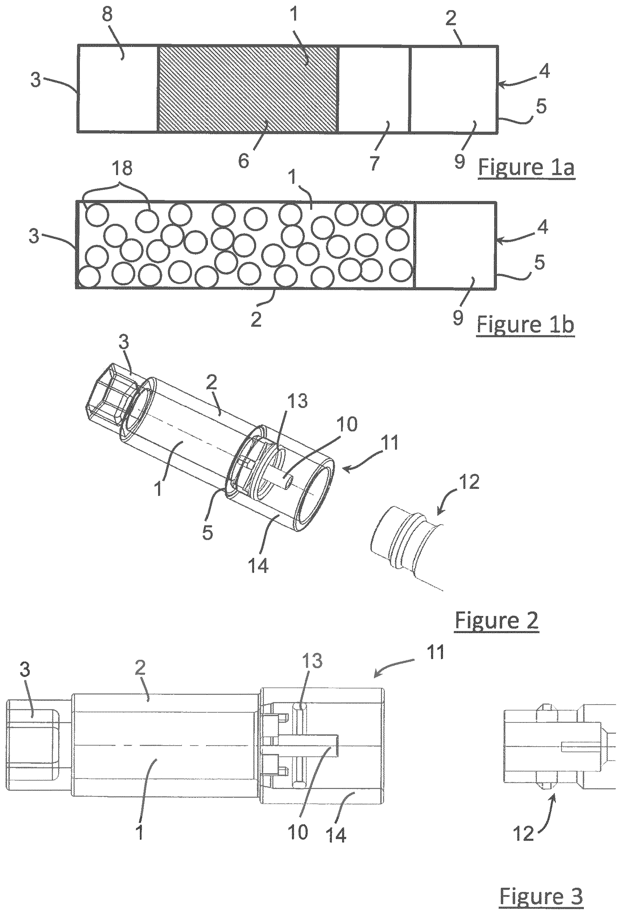

La figure 1a schématise un exemple de réalisation de l'invention, dans laquelle le dispositif se présente globalement sous la forme d'une cartouche formée par un corps 2 creux étanche délimitant un volume intérieur 1. Un fluide peut être admis par une extrémité proximale et se trouve bloqué dans le volume du corps creux 2 qui ne présente pas de passage de fluide hormis pour son admission. Avantageusement, le corps 2 est en matière plastique et présente un niveau de transparence suffisant au moins sur une portion adéquate de sa surface de sorte à permettre une lisibilité d'un changement de couleur du réactif en cas de détection de présence d'un fluide réfrigérant prédéterminé.

Globalement, le corps 2 s'étend depuis une extrémité proximale 4 au niveau de laquelle se trouve une entrée 5 permettant l'introduction de fluide dans le volume intérieur 1, jusqu'à une extrémité distale 3. On comprend que, sous l'effet d'une certaine pression de fluide, ce dernier a tendance à occuper le volume intérieur 1 lorsqu'il est admis par l'entrée fluidique 5.

Le réactif occupe tout ou partie du volume intérieur 1. Dans le cas de l'exemple, le réactif est incorporé un support 6. Ce dernier est, selon un mode de réalisation, en matière poreuse ou présente une structure ajourée de sorte à permettre le passage de fluide à l'intérieur de son volume pour répartir de manière satisfaisante le fluide dans le volume 1. De manière préférée, le support 6 est constitué ou est à base d'alumine, et en particulier est un bloc d'alumine poreux.

Selon une possibilité, le réactif est synthétisé en phase liquide, de préférence en solution aqueuse, et le support en est ensuite imprégné puis séché sous-vide.

Optionnellement, un filtre peut être positionné en amont du support 6, c'est-à-dire plus vers l'entrée fluidique 5. Ce filtre a pour fonction de retenir des éléments (poussières et/ou huiles et/ou traceurs (qui peuvent être des colorants traçable notamment sous lumière UV)) qui sont susceptibles d'être présents et de gêner la réaction chimique et/ou de fermer le volume de réception de manière non étanche aux gaz. À titre d'exemple, un filtre peut être formé d'un bloc ou d'une couche d'alumine présentant une porosité suffisante pour laisser le fluide parvenir jusqu'au support 6. Cet exemple n'exclut pas que d'autres filtres sont également présents. En outre, un espace résiduel entre le filtre et l'extrémité proximale 5 du corps 2 peut être occupé par une couche tampon 9 ; la couche tampon 9 est notamment en ouate de coton. De l'autre côté du support 6, une couche postérieure 8 peut être présente. Il peut aussi s'agir d'une couche d'alumine poreuse.

Suivant le mode de réalisation de la figure 1b, le corps creux est globalement, équivalent au cas de la figure 1a. Il reçoit dans ce cas des particules qui sont le support du réactif. Ce dernier peut être issu d'une phase liquide ayant recouvert les particules (ou une partie d'entre-elles) et séchée. Suivant une possibilité, les particules ont une forme de billes, la surface extérieure étant sphérique (ce qui n'exclut pas une rugosité importante sur cette surface). Avantageusement, le contact entre les billes est tel que les billes préservent des espaces entre elles, ces espaces permettant le passage du fluide. Le demandeur a constaté que cette solution répartit rapidement le fluide dans le volume de réception 1, ce qui est aussi avantageux pour obtenir une réaction homogène dans ce volume avec le réactif. La visualisation se fait en observant un changement de couleur à la surface des particules.

Dans un cas non limitatif, les billes 18 présentent un diamètre compris entre 2,5 mm et 5 mm, et avantageusement entre 3 mm et 4 mm. Le demandeur a constaté que ce choix dimensionnel était particulièrement intéressant pour disposer d'une densité de billes élevée tout en ayant des espaces interstitiels satisfaisants. À titre d'exemple, pour remplir un volume de réception 1 présentant un volume de l'ordre de 2600/2700 mm³, le volume ayant par exemple des dimensions d'un cylindre de 11 mm de diamètre pour une hauteur de 28,2 mm, on peut utiliser entre 20 et 30 billes, par exemple 24 ou 25, avec un diamètre de l'ordre de 3 à 4 mm. Dans ces conditions, le réactif revêtant la surface extérieure des billes représente un poids de 1,5 g. Bien évidemment, les incertitudes de fabrication et de mesures peuvent faire varier ces paramètres dans une gamme de tolérance. Cet exemple chiffré n'est par ailleurs aucunement limitatif.

Dans le mode de réalisation illustré non limitatif, seule une couche tampon est présente, servant simplement de couche de couverture, non étanche aux gaz, au-dessus des particules.

Dans le mode de réalisation employant des particules, ou dans tout autre mode réalisation, le volume de réception peut être simplement coiffé par une couche tampon perméable aux gaz.

Deux exemples ont été précédemment décrits, l'un en référence à un réactif porté par une couche poreuse, l'autre en référence à réactif porté par des particules. L'invention peut aussi comprendre une combinaison des deux types de supports, par exemple de manière superposée au sein du volume de réception 1.

D'une manière générale, il est avantageux que le dispositif de l'invention présente des moyens facilitant sa coopération avec le circuit de climatisation dans le fluide réfrigérant à identifier. À cet effet, les figures 2 et 3 montrent un mode de réalisation de l'invention comportant différentes dispositions pour associer le dispositif et un embout 12 du circuit de climatisation. D'une manière générale, il est avantageux que le dispositif comporte une interface 11 adaptée à la conception de l'embout 12 du circuit à tester. Dans le cas schématisé sur la figure 2, l'embout 12 correspond à un raccord de service présent sur les véhicule et comprenant notamment une valve comportant un piston rétractable appelé obus de sorte à ouvrir une sortie de fluide.

Le dispositif de l'invention peut comporter dans ce contexte une interface 11 présentant une paroi périphérique 14, par exemple sous forme d'une enveloppe cylindrique creuse, apte à un emmanchement sur la surface extérieure de l'embout 12. Éventuellement, la surface intérieure de la paroi périphérique 14 peut comporter une portion de verrouillage (par exemple un ou plusieurs reliefs en saillie pour coopérer avec une portion complémentaire (par exemple un épaulement) de l'embout 12. Bien évidemment d'autres modalités de coopération, en particulier par emmanchement, peuvent être satisfaisantes.

Dans le cas de la figure 2, on comprend que la paroi périphérique 14 délimite une embouchure par laquelle est introduite l'extrémité distale de l'embout 12, cette extrémité étant ensuite amenée dans le volume intérieur de la paroi périphérique 14 jusqu'à un percuteur 10. À ce stade, une poussée supplémentaire provoque le retrait du piston de la valve de l'embout 12 du fait d'un contact du piston avec le percuteur 10.

Avantageusement, un joint 13 est présent dans le volume intérieur défini par la paroi périphérique 14 de sorte à s'appliquer de manière étanche sur une portion de l'embout 12, et préférentiellement sur la tranche de son extrémité distale, généralement de forme circulaire. On pourra utiliser un joint 13 de nature torique. On comprend que le dispositif reçoit le fluide à tester et que ce dernier passe de manière étanche du circuit de climatisation au volume de réception 1 sans échappement à l'atmosphère.

La figure 3 montre en coupe longitudinale le dispositif de l'invention ainsi constitué et on comprend que le joint 13 combiné à l'emmanchement par la paroi périphérique 14 assure l'étanchéité au moins partielle dans cette zone de sorte que, lorsque le percuteur 10 ouvre la valve de l'embout 12, le fluide réfrigérant est amené vers le volume intérieur 1 qui est réalisé de manière communicante avec l'interface 11 au travers de l'entrée fluidique 5.

Éventuellement, le dispositif peut être équipé de moyens d'accouplement permettant la coopération avec un outil de manipulation du dispositif sur l'embout 12, par exemple une rallonge pour atteindre plus facilement à un endroit peu accessible. Par exemple, dans le cas des figures 2 et 3, l'extrémité distale 3 comporte une empreinte femelle permettant d'introduire un outil, par exemple une clef six pans. D'autres dispositions alternatives ou cumulatives sont possibles, par exemple sur la paroi du corps 2 ou de l'interface 11.

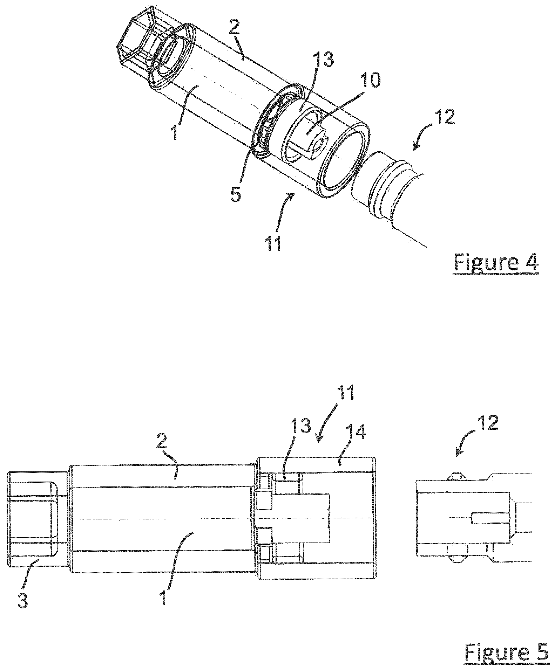

Les figures 4 et 5 présentent une variante de réalisation dans laquelle percuteur 10 est doté d'un trou central dans lequel le piston de la valve de l'embout 12 peut s'insérer lors de l'emmanchement. En fin de course, la base du piston est mobilisée en translation pour ouvrir la valve. Ce mode de réalisation présente une autre possibilité de l'invention portant sur un joint 13, sous forme d'une bague présentant une section oblongue et non pas une section sensiblement circulaire comme un joint torique. Grâce à cette configuration, la bague formant joint 13 peut se déformer en flexion (soit encore par flambage) lorsqu'une compression lui est appliquée par l'intermédiaire de l'embout 12. Cela permet d'assurer un débattement longitudinal de l'embout 12 au contact du joint 13 plus important que dans le cas d'un joint torique. Par exemple, la largeur du joint 13, tel que représenté en figure 5, présente une dimension comprise entre 2 millimètres et 6 millimètres.

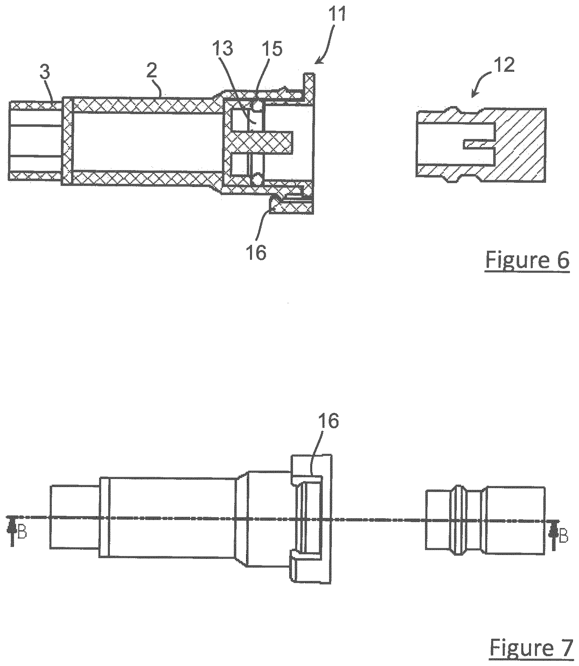

Un autre mode de réalisation est présenté aux figures 6 et 7. Le principe de fonctionnement est sensiblement équivalent à celui des modes de réalisation précédents, notamment par le recours à un percuteur 10 et à une surface d'emmanchement, aptes à coopérer avec l'embout 12. Néanmoins, l'interface 11 y est formée avec au moins une pièce réalisée de manière amovible relativement au corps. En l'espèce, une bague proximale dotée de moyens de clipsage 16 équipe le dispositif de sorte à participer à la paroi périphérique 14 coopérant avec l'embout 12. Éventuellement, cette pièce amovible peut aussi comprendre le percuteur 10 et/ou porter le joint 13 de sorte à former un ensemble d'admission de fluide qui soit séparé de l'ensemble contenant le réactif.

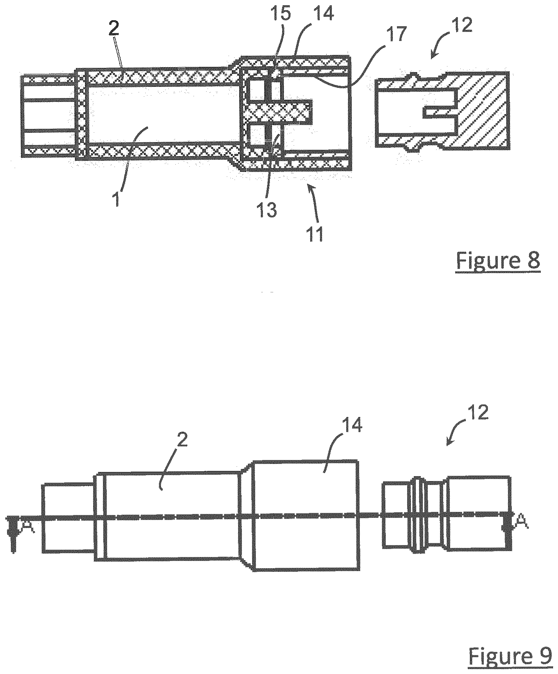

Une autre variante est illustrée aux figures 8 et 9. Globalement, l'interface 11 y comportent une partie cylindrique creuse dans la continuité du corps 2 admettant dans son volume intérieur une pièce de base portant le percuteur et une bague 17, la pièce de base et la bague 17 étant disposées par emmanchement à ajustement serré dans la portion périphérique 14 dans la continuité du corps. Un intérêt de cette configuration est de former une gorge 15 entre la pièce de base et la bague 17 pour assurer la rétention du joint 13 à l'intérieur de l'interface 11. On rejoint ainsi la configuration de joint fixe présentée à la figure 6.

On notera que, comme dans le cas précédent, tout ou partie de la zone d'interface 11 peut être réalisée en un matériau plus résistant mécaniquement que d'autres parties du dispositif, notamment le corps 2. Par exemple, la bague 17 peut être métallique, ce qui peut augmenter sa résistance lors d'une coopération entre une portion de cette bague 17 et l'embout 12.

Eventuellement, au moins une valve, configurée pour fermer sélectivement le volume de réception de gaz, équipe le dispositif.

Cette valve peut être sur la partie du dispositif comprenant le réactif (par exemple à l'embouchure du volume 1 et cette valve est ouverte lors de l'assemblage avec une autre partie du dispositif ou lors du raccordement sur l'embout 12. Par exemple, sa commande en ouverture et/ou en fermeture peut être manuelle, notamment par un bouton poussoir déplaçable entre une position d'obturation d'un canal de passage du fluide et une position d'ouverture. Une autre possibilité est une valve qui est fermée par défaut (par exemple à l'encontre d'un élément de rappel élastique tel un ressort) et est ouverte par la poussée d'un organe d'appui solidaire d'une autre partie (l'interface 11 si elle est amovible ou encore l'embout 12 lui-même).

Une valve peut, en complément ou alternativement, équiper l'interface 11 en particulier lorsqu'elle est amovible. De cette façon, lorsque l'interface 11 est montée de manière étanche sur la partie contentant le réactif, la valve peut assurer une absence de sortie de fluide en dehors du dispositif en fin de test. Là-encore, des valves automatiques ou manuelles, dont celles évoquées plus haut, sont employables.

On peut notamment réaliser un dispositif avec une partie jetable, comprenant le réactif, et une partie réutilisable comprenant tout ou partie de l'interface de coopération avec l'embout 12. Par exemple, on peut former une première partie en matière plastique transparente de moindre résistance et une deuxième partie en matériau plus résistant, notamment en matière plastique plus rigide ou encore en aluminium ou en acier. Éventuellement, une portion taraudée de l'interface 11 est portée par la partie amovible, de préférence en matériau plus résistant, de sorte à améliorer la coopération avec l'embout 12.

Ainsi, on peut rapporter l'interface 11 sur le corps 2 en faisant coopérer par emmanchement cylindre sur cylindre une surface cylindrique dans la continuité du corps 2 et une surface cylindrique de l'interface 11, cette dernière étant amovible et rapportée de manière fixe grâce à des moyens notamment de clipsage 16.

En opération, l'identification de fluide réfrigérant peut être réalisée de la manière suivante. Le dispositif est raccordé à l'embout 12 avec un appui suffisant pour que la longueur d'emmanchement assure la mise en contact du percuteur 10 et du piston de la valve de l'embout 12. S'ensuit l'ouverture de la valve et l'admission de fluide réfrigérant issu du circuit de climatisation à l'intérieur du volume 1. À ce stade, le fluide est au contact du réactif si bien que, si une fonction éthylène est présente, la réaction de l'invention est révélée par un changement de couleur.

En fin d'opération, l'opérateur n'a qu'à détacher le dispositif de l'embout 12. Éventuellement, une partie du dispositif est réutilisée pour une autre identification alors que la partie du dispositif qui contient le réactif est jetée ou recyclée si ce dernier a réagi.

### REFERENCES

1. Volume de réception
2. Corps
3. Extrémité distale
4. Extrémité proximale
5. Entrée
6. Support
7. Première couche d'alumine
8. Couche d'alumine postérieure
9. Couche tampon
10. Percuteur
11. Interface
12. Embout
13. Joint
14. Paroi périphérique
15. Gorge
16. Moyen de clipsage
17. Bague
18. Bille

## Revendications

1. Dispositif d'identification d'au moins une composition de fluide réfrigérant, comprenant un volume de réception (1) de fluide réfrigérant dotée d'une entrée (5) apte à être raccordée à un circuit de climatisation, et des moyens de détection de présence de l'au moins une composition dans le fluide réfrigérant dans le volume de réception (1), le dispositif comprenant un corps creux étanche délimitant, en son intérieur, le volume de réception (1) de manière étanche jusqu'à une extrémité distale (3) du volume de réception (1) depuis une extrémité proximale (4) située au niveau de l'entrée (5), permettant une introduction de fluide réfrigérant sous forme de gaz dans le volume de réception (1) et une occupation dudit volume de réception par le fluide réfrigérant lorsqu'il est admis par l'entrée (5), le volume de réception (1) ne comprenant que l'entrée (5) comme passage de fluide de sorte que le fluide se trouve bloqué dans le volume de réception (1), et en ce que les moyens de détection comprennent un réactif placé dans le volume de réception (1) et configuré pour réagir par une réaction chimique avec au moins une fonction éthylène, de sorte à identifier une composition de fluide réfrigérant comprenant une fonction éthylène, le réactif étant configuré pour que le produit de la réaction chimique présente une couleur différente de celle du réactif.

2. Dispositif selon la revendication précédente, dans lequel le réactif comprend un oxydant de la fonction éthylène.

3. Dispositif selon l'une des revendications précédentes, comprenant au moins un filtre disposé entre l'entrée fluidique (5) et le réactif.

4. Dispositif selon la revendication précédente, dans lequel le au moins un filtre est configuré pour piéger des fluides huileux en laissant passer le fluide réfrigérant vers l'extrémité distale (3) du volume de réception (1).

5. Dispositif selon la revendication précédente, dans lequel le au moins un filtre comprend de l'alumine.

6. Dispositif selon la revendication précédente, dans lequel le au moins un filtre comprend une première couche d'alumine (7) poreuse au fluide réfrigérant.

7. Dispositif selon l'une des revendications précédentes, dans lequel le réactif est porté par au moins un support (6) contenant ou consistant en de l'alumine ou en un silicate, et de préférence dans lequel le support (6) comprend une deuxième couche d'alumine poreuse au fluide réfrigérant.

8. Dispositif selon l'une des revendications précédentes, dans lequel le volume de réception comprend une pluralité de particules, au moins une portion du réactif étant située sur la surface extérieure d'au moins une partie des particules.

9. Dispositif selon la revendication précédente, dans lequel les particules sont des billes.

10. Dispositif selon la revendication précédente, dans lequel les billes présentent un diamètre compris entre 2.5 mm et 5 mm, et de préférence entre 3 mm et 4 mm, et/ou dans lequel le réactif a un poids compris entre 1 et 2 grammes, et de préférence de 1.5 grammes.

11. Dispositif selon l'une des revendications précédentes, dans lequel le réactif contient du permanganate de potassium.

12. Dispositif selon l'une des revendications précédentes, comprenant une interface (11) de raccordement fluidique comprenant un passage de fluide vers l'entrée (5) et apte à être connectée mécaniquement à un circuit de climatisation, et de préférence dans lequel l'interface (11) comprend un percuteur (10) configuré pour ouvrir une valve d'un embout (12) du circuit de climatisation.

13. Dispositif selon l'une des deux revendications précédentes, dans lequel l'interface (11) et le corps (2) sont deux pièces distinctes assemblables de manière amovible.

14. Dispositif selon l'une des revendications précédentes, dans lequel l'extrémité distale (3) comporte une empreinte, de préférence à six pans, configurée pour coopérer avec un outil.

15. Procédé d'identification d'au moins une composition de fluide réfrigérant d'un circuit de climatisation, comprenant une détection de présence de l'au moins une composition dans le fluide réfrigérant dans un volume de réception (1) de fluide, dans lequel la détection comprend la mise en contact du fluide réfrigérant sous forme de gaz avec un réactif placé dans le volume de réception (1) et configuré pour réagir lors d'une réaction chimique avec une fonction éthylène, de sorte à identifier une composition comprenant une fonction éthylène, le réactif étant choisi pour que le produit de la réaction chimique présente une couleur différente de celle du réactif.

## Patentansprüche

1. Vorrichtung zum Identifizieren mindestens einer Kühlflüssigkeitszusammensetzung, umfassend ein Aufnahmevolumen (1) für Kühlflüssigkeit, das mit einem Einlass (5) versehen ist, der geeignet ist, um mit einem Klimatisierungskreislauf verbunden zu werden, und Mittel zum Erfassen eines Vorhandenseins der mindestens einen Zusammensetzung in der Kühlflüssigkeit in dem Aufnahmevolumen (1), die Vorrichtung umfassend einen undurchlässigen Hohlkörper, der in seinem Inneren das Aufnahmevolumen (1) auf undurchlässige Weise bis zu einem distalen Ende (3) des Aufnahmevolumens (1) von einem proximalen Ende (4), das an dem Einlass (5) gelegen ist, begrenzt, wobei eine Einleitung von Kühlflüssigkeit in Gasform in das Aufnahmevolumen (1) und eine Belegung des Aufnahmevolumens durch die Kühlflüssigkeit ermöglicht wird, wenn es durch den Einlass (5) zugeführt wird, das Aufnahmevolumen (1) nur umfassend den Einlass (5) als Flüssigkeitskanal, so dass sich die Flüssigkeit in dem Aufnahmevolumen (1) blockiert befindet, und dass die Erfassungsmittel ein Reagens umfassen, das in dem Aufnahmevolumen (1) platziert und zum Reagieren durch eine chemische Reaktion mit mindestens einer Ethylenfunktion konfiguriert ist, um eine Kühlflüssigkeitszusammensetzung, umfassend eine Ethylenfunktion, zu identifizieren, wobei das Reagens konfiguriert ist, damit das Produkt der chemischen Reaktion eine andere Farbe als die des Reagens vorweist.

2. Vorrichtung nach dem vorstehenden Anspruch, wobei das Reagens einen Sauerstoffträger der Ethylenfunktion umfasst.

3. Vorrichtung nach einem der vorstehenden Ansprüche, umfassend mindestens ein Filter, das zwischen dem Flüssigkeitseinlass (5) und dem Reagens angeordnet ist.

4. Vorrichtung nach dem vorstehenden Anspruch, wobei das mindestens eine Filter zum Einfangen von ölhaltigen Flüssigkeiten konfiguriert ist, indem die Kühlflüssigkeit in Richtung des distalen Endes (3) des Aufnahmevolumens (1) durchgelassen wird.

5. Vorrichtung nach dem vorstehenden Anspruch, wobei das mindestens eine Filter Aluminiumoxid umfasst.

6. Vorrichtung nach dem vorstehenden Anspruch, wobei das mindestens eine Filter eine erste Aluminiumoxidschicht (7) umfasst, die gegenüber der Kühlflüssigkeit porös ist.

7. Vorrichtung nach einem der vorstehenden Ansprüche, wobei das Reagens durch mindestens einen Träger (6), der Aluminiumoxid oder ein Silikat enthält oder daraus besteht, getragen wird und vorzugsweise, wobei der Träger (6) eine zweite Aluminiumoxidschicht umfasst, die gegenüber der Kühlflüssigkeit porös ist.

8. Vorrichtung nach einem der vorstehenden Ansprüche, wobei das Aufnahmevolumen eine Vielzahl von Partikeln umfasst, wobei mindestens ein Anteil des Reagens auf der Außenoberfläche mindestens eines Teils der Partikel gelegen ist.

9. Vorrichtung nach dem vorstehenden Anspruch, wobei die Partikel Kugeln sind.

10. Vorrichtung nach dem vorstehenden Anspruch, wobei die Kugeln einen Durchmesser zwischen 2,5 mm und 5 mm und vorzugsweise zwischen 3 mm und 4 mm vorweisen und/oder wobei das Reagens ein Gewicht zwischen 1 und 2 Gramm, und vorzugsweise von 1,5 Gramm besitzt.

11. Vorrichtung nach einem der vorstehenden Ansprüche, wobei das Reagens Kaliumpermanganat enthält.

12. Vorrichtung nach einem der vorstehenden Ansprüche, umfassend eine Flüssigkeitsverbindungsschnittstelle (11), umfassend einen Flüssigkeitskanal in Richtung des Einlasses (5) und der geeignet ist, um an einen Klimatisierungskreislauf mechanisch angeschlossen zu werden, und vorzugsweise wobei die Schnittstelle (11) einen Schlagbolzen (10) umfasst, der zum Öffnen eines Ventils eines Ansatzstückes (12) des Klimatisierungskreislaufs konfiguriert ist.

13. Vorrichtung nach einem der zwei vorstehenden Ansprüche, wobei die Schnittstelle (11) und der Körper (2) zwei verschiedene Stücke sind, die auf ablösbare Weise zusammensetzbar sind.

14. Vorrichtung nach einem der vorstehenden Ansprüche, wobei das distale Ende (3) eine Vertiefung, vorzugsweise mit sechs Kanten, aufweist, die zum Zusammenwirken mit einem Werkzeug konfiguriert ist.

15. Verfahren zum Identifizieren mindestens einer Kühlflüssigkeitszusammensetzung eines Klimatisierungskreislaufs, umfassend eine Erfassung des Vorhandenseins der mindestens einen Zusammensetzung in der Kühlflüssigkeit in einem Aufnahmevolumen (1) für Flüssigkeit, wobei die Erfassung das Inberührungbringen der Kühlflüssigkeit in Gasform mit einem Reagens umfasst, das in dem Aufnahmevolumen (1) platziert und zum Reagieren bei einer chemischen Reaktion mit einer Ethylenfunktion konfiguriert ist, um eine Zusammensetzung, umfassend eine Ethylenfunktion, zu identifizieren, wobei das Reagens ausgewählt ist, damit das Produkt der chemischen Reaktion eine andere Farbe als die des Reagens vorweist.

## Claims

1. Device for identifying at least one refrigerant fluid composition, comprising a receiving volume (1) for refrigerant fluid, provided with an inlet (5) suitable for being connected to an air conditioning circuit, and means for detecting the presence of the at least one composition in the refrigerant fluid in the receiving volume (1), the device comprising a sealed hollow body defining, in its interior, the receiving volume (1) in a sealed manner as far as a distal end (3) of the receiving volume (1) from a proximal end (4) situated at the inlet (5), allowing the introduction of refrigerant fluid in the form of gas into the receiving volume (1) and the occupation of said receiving volume by the refrigerant fluid when it is admitted via the inlet (5), the receiving volume (1) comprising only the inlet (5) as a fluid passage such that the fluid is blocked in the receiving volume (1), and in that the detection means comprise a reagent which is placed in the receiving volume (1), and is designed to react by a chemical reaction with at least one ethylene function so as to identify a refrigerant fluid composition comprising an ethylene function, the reagent being designed such that the product of the chemical reaction has a different color from that of the reagent.

2. Device according to the preceding claim, wherein the reagent comprises an oxidant of the ethylene function.

3. Device according to either of the preceding claims, comprising at least one filter arranged between the fluid inlet (5) and the reagent.

4. Device according to the preceding claim, wherein the at least one filter is designed to trap oily fluids while allowing the refrigerant fluid to pass toward the distal end (3) of the receiving volume (1).

5. Device according to the preceding claim, wherein the at least one filter comprises alumina.

6. Device according to the preceding claim, wherein the at least one filter comprises a first alumina layer (7) that is porous to the refrigerant fluid.

7. Device according to any of the preceding claims, wherein the reagent is carried by at least one support (6) containing or consisting of alumina or a silicate, and preferably wherein the support (6) comprises a second alumina layer that is porous to the refrigerant fluid.

8. Device according to any of the preceding claims, wherein the receiving volume comprises a plurality of particles, at least a portion of the reagent being located on the outer surface of at least a portion of the particles.

9. Device according to the preceding claim, wherein the particles are beads.

10. Device according to the preceding claim, wherein the beads have a diameter of between 2.5 mm and 5 mm, and preferably between 3 mm and 4 mm, and/or wherein the reagent has a weight of between 1 and 2 grams, and preferably 1.5 grams.

11. Device according to any of the preceding claims, wherein the reagent contains potassium permanganate.

12. Device according to any of the preceding claims, comprising a fluid connection interface (11) comprising a fluid passage to the inlet (5) and capable of being mechanically connected to an air conditioning circuit, and preferably wherein the interface (11) comprises a striker (10) designed to open a valve of an end piece (12) of the air conditioning circuit.

13. Device according to either of the two preceding claims, wherein the interface (11) and the body (2) are two separate parts which are removably attachable.

14. Device according to any of the preceding claims, wherein the distal end (3) comprises a recess, preferably hexagonal, designed to cooperate with a tool.

15. Method for identifying at least one refrigerant fluid composition of an air conditioning circuit, comprising detecting the presence of the at least one composition in the refrigerant fluid in a receiving volume (1) for fluid, wherein the detection comprises placing the refrigerant fluid in the form of gas in contact with a reagent which is placed in the receiving volume (1) and is designed to react during a chemical reaction with an ethylene function so as to identify a composition comprising an ethylene function, the reagent being selected so that the product of the chemical reaction has a different color from that of the reagent.
